Europäisches Patentamt

European Patent Office

Office européen des brevets

(11) Numéro de publication: **0 220 436 B1**

(12) **FASCICULE DE BREVET EUROPEEN**

(45) Date de publication de fascicule du brevet:
14.08.91

(51) Int. Cl.⁵: **B23H 7/10**

(21) Numéro de dépôt: 86112344.6

(22) Date de dépôt: 06.09.86

(54) **Dispositif pour redresser et couper un fil métallique.**

(30) Priorité: 16.09.85 CH 4018/85

(43) Date de publication de la demande:
06.05.87 Bulletin 87/19

(45) Mention de la délivrance du brevet:
14.08.91 Bulletin 91/33

(84) Etats contractants désignés:
DE FR GB IT

(56) Documents cités:
EP-A- 0 107 737

(73) Titulaire: **CHARMILLES TECHNOLOGIES S.A.
rue du Pré-de-la-Fontaine 8-10
CH-1242 Satigny(CH)**

(72) Inventeur: **Martin, Roland**

**F-74520 Valleiry(FR)**
Inventeur: **Martin, François**

**F-74520 Valleiry(FR)**

(74) Mandataire: **Blum, Rudolf Emil Ernst et al
c/o E. Blum & Co Patentanwälte Vorderberg
11
CH-8044 Zürich(CH)**

## Description

L'invention se rapporte à un dispositif pour redresser et couper un fil métallique destiné à servir d'électrode de découpage en vue de son enfilage sur une machine à électro-érosion. De tels fils servent au découpage par électro-érosion et doivent pour cela être enfilés dans les organes de guidage d'une machine à découper par électro-érosion. Une forme préférée d'un tel guide est une filière, c'est-à-dire une pièce en saphir ou en diamant percée d'un orifice cylindrique; on parle alors d'un guide fermé par opposition à un guide ouvert, lequel est constitué d'une pièce portant un sillon en ⋎. Le guide fermé a l'avantage de présenter une symétrie axiale très utile lorsqu'on veut pouvoir incliner le fil dans n'importe quelle direction lors de la découpe.

Afin d'assurer une bonne précision, le fil a un diamètre légèrement inférieur au diamètre du guide fermé. On choisit par exemple un diamètre de 250 $\mu$m pour le fil et de 252 $\mu$m pour le guide fermé. Dans ces conditions on conçoit très bien qu'il est difficile d'enfiler le fil à cause du frottement dans les guides et de la tendance du fil à flamber à cause de sa faible rigidité.

Des systèmes d'enfilage automatique ont été développés, comme celui décrit dans la demande européenne EP-A 0 206 041. Néanmoins,la plupart de ces systèmes exigent que le premier enfilage soit manuel. La méthode usuelle consiste à saisir le fil entre les deux mains, à le tendre et à approcher une flamme, par exemple celle d'un briquet, en un point donné du fil. Sous l'effet conjugué de la traction et de la chaleur, le fil s'étire et prend une forme rectiligne; finalement, il finit par se rompre au point le plus chaud avec un phénomène connu de striction, ou diminution de diamètre. Après rupture, les 2 brins présentent une forme pointue particulièrement favorable à l'enfilage dans un guide fermé. L'inconvénient de cette technique est qu'elle nécessite l'apprentissage d'un tour de main, car il faut simultanément régler la force de traction et approcher progressivement la flamme. Un opérateur peu entraîné doit s'y prendre à plusieurs reprises avant d'obtenir l'effet désiré, à savoir un fil redressé sur une longueur suffisante et se terminant en une pointe allongée. De plus l'opérateur n'a pas 3 mains pour tenir le fil et le briquet.

L'invention vise à éliminer ces difficultés. A cet effet, elle est définie comme il est dit à la revendication 1. Grâce à cela, l'opération à effectuer reste manuelle, mais elle devient d'une extrême simplicité, à ce point qu'une personne sans aucun apprentissage parvient du premier coup à donner au fil une coupure de la qualité désirée. De plus, l'appareil est peu coûteux et si peu encombrant qu'il peut être monté directement sur la machine, à proximité immédiate des guides, ce qui est particulièrement désirable.

L'invention sera maintenant illustrée plus en détail par la description de modes de réalisation et à l'aide du dessin, dans lequel

la fig. 1 montre un exemple de réalisation du dispositif selon l'invention,

la fig. 2 montre une variante de l'écran servant à diminuer localement les pertes de chaleur du fil avant la rupture,

la fig. 3 montre des zones préférées pour le montage du dispositif sur une machine à électro-érosion par fil,

la fig. 4 montre une variante du mode de réalisation illustré à la figure 1.

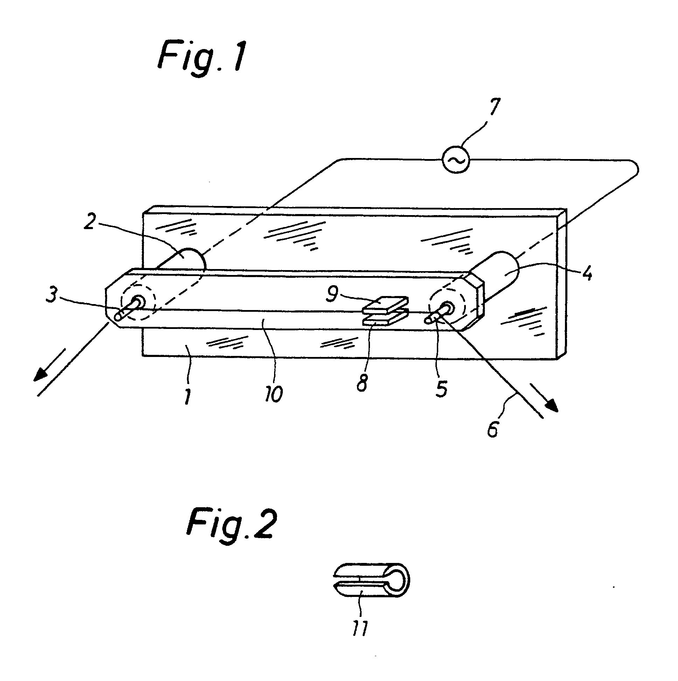

La figure 1 montre un dispositif selon l'invention monté sur une plaque-support verticale 1 qui peut par exemple faire partie d'une machine à éroder par fil. Deux isolateurs 2 et 4 portent les plots métalliques 3 et 5 qui sont reliés aux bornes d'une source de courant 7. Pour des raisons d'économie on utilisera en général une source de courant alternatif comme il est montré à la figure 1, mais une source de courant continu est également utilisable. La tension fournie par la source sera par exemple d'une dizaine de volts, afin d'être sans danger pour l'opérateur et quand-même suffisante pour amener par effet Joule un fil-électrode usuel mis en contact avec les plots à une température permettant sa déformation plastique sous l'effet d'une traction aisément exercée à la main. Deux plaquettes 8 et 9 sont fixées sur une baguette isolante 10 montée entre les plots. Ces plaquettes sont situées au-dessus et au-dessous de la trajectoire d'un fil 6 tendu entre les plots par des tractions exercées dans le sens des flèches et font localement obstacle aux courants de convection qui se forment lorsque le fil est chauffé par passage du courant fourni par la source 7.

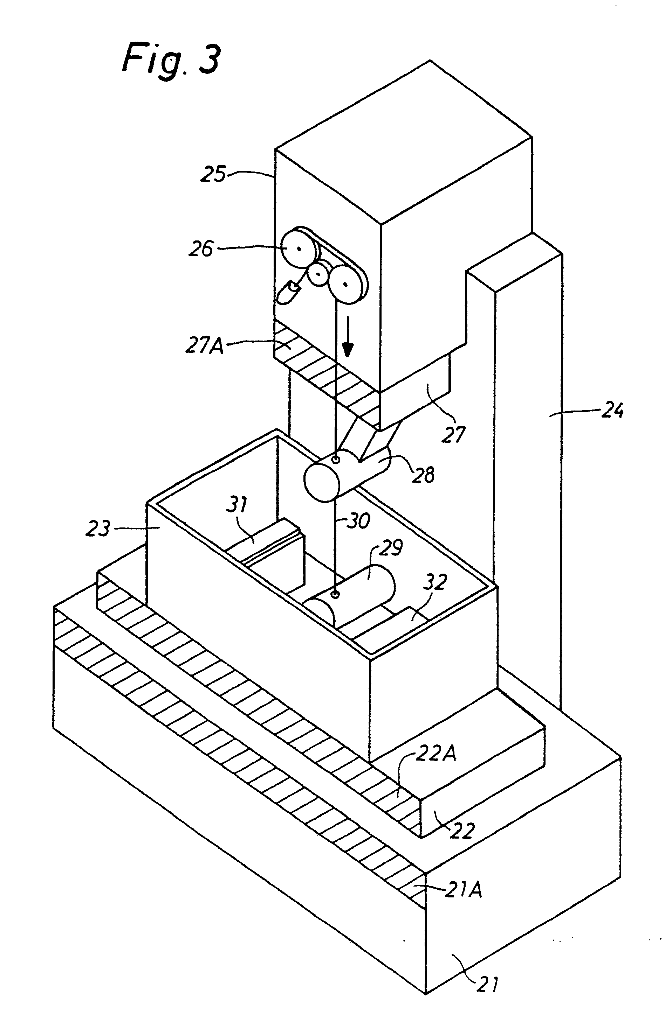

On sait que les courants de convection de l'air sont microscopiquement tourbillonnaires, mais prennent un mouvement ascendant d'ensemble à cause de la plus faible densité de l'air échauffé. Les écrans formés par les plaquettes 8 et 9 restreignent ce mouvement ascendant, et le fil est donc localement moins refroidi. Par conséquent le fil a une température localement plus élevée dans la région des plaquettes et la rupture par striction se produit à cet endroit avec la forme pointue allongée désirée. Les plots 3 et 5 sont placés à une distance assez grande pour redresser le fil sur une longueur suffisante. Cette distance peut par exemple être choisie supérieure au diamètre des têtes d'usinage 28 et 29 d'une machine à érosion par fil (fig. 3), mais on peut aussi écarter les plots suffisamment pour que la partie redressée du fil puisse traverser d'un coup les deux têtes d'usinage, au moins lorsqu'elles sont fortement rapprochées l'une de l'autre. En général cette longueur de fil redressé sera notablement plus grande que celle de la partie du fil portée à une température plus élevée à cause de l'écran formé par les plaquettes 8 et 9. L'extension de celles-ci parallèlement à la direction du fil sera donc nettement inférieure à la distance séparant les plots, par exemple de l'ordre d'un sixième de cette distance.

Bien que l'effet principal des plaquettes soit une réduction locale du refroidissement du fil 6 par convection, l'écran formé par ces plaquettes peut également réfléchir une partie du rayonnement thermique émis par le fil si on le désire. Dans ce cas on utilisera un écran métallique ou métallisé, tandis qu'un écran transparent sera utilisé si l'on désire un contrôle visuel de la zone de rupture. La présente invention n'est pas limitée à un écran constitué par deux plaquettes. Il peut revêtir toute forme appropriée, par exemple celle d'un écran cylindrique 11 qui sera de préférence fendu longitudinalement comme il est montré à la figure 2, pour faciliter l'introduction du fil.

La figure 3 montre en perspective une machine bien connue de découpage par électro-érosion au moyen d'un fil-électrode. Cette machine comporte un bâti 21 et une table 22 à mouvements croisés supportant un bac 23 dans lequel se trouvent deux supports 31 et 32 pour supporter la pièce à usiner (non représentée). Une colonne 24 porte un bloc supérieur 25 sur lequel est monté un dispositif 26 de fourniture du fil ainsi qu'une seconde table 27 à mouvements croisés qui permet d'incliner le fil-électrode 30 par rapport à la verticale, par déplacement d'une tête d'usinage supérieure 28 relativement à une tête d'usinage inférieure 29 située dans le bac 23. La partie active du fil est tendue entre deux guides de faible dimension (non représentés) situés à l'intérieur des têtes d'usinage. Un système d'avance (non représenté) assure un défilement continu du fil dans le sens de la flèche, afin qu'il soit continuellement renouvelé. Lorsque le fil doit être réenfilé manuellement parce qu'il s'est cassé - ou pour tout autre raison - le dispositif pour le redresser et le couper doit être à portée de main de l'opérateur et sera monté de préférence sur une des surfaces hachurées 21A, 22A ou 27A. Comme celles-ci sont verticales et fort allongées dans le sens horizontal, on peut y placer les deux plots sensiblement à la même hauteur, de manière à assurer un bon refroidissement par convection du fil dans sa partie non protégée par un écran en même temps qu'une forte réduction de ce refroidissement dans la zone protégée par un écran, même si celui-ci n'est que partiellement fermé en direction radiale. Le courant nécessaire au chauffage par effet Joule du fil à redresser peut facilement être dérivé des circuits préexistant dans la machine à éroder, et en raison de la faible tension utilisée, les plots peuvent être constamment sous tension tant que la machine est en service, ce qui élimine la nécessité d'un interrupteur.

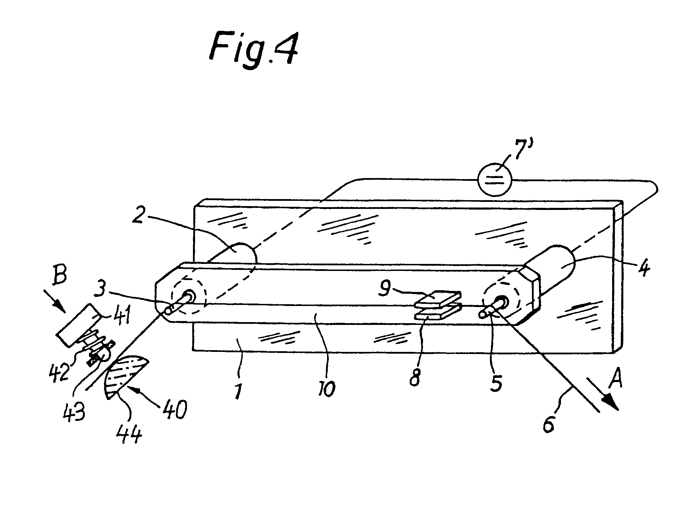

Enfin, la figure 4 montre un mode de réalisation qui empêche l'établissement d'une différence de potentiel, même minime, à travers les mains de l'opérateur. On retrouve dans cette figure des éléments analogues à ceux de la figure 1 et ils portent donc les mêmes numéros de référence. La source de courant 7' est flottante c'est-à-dire qu'elle n'est pas mise à la terre, et le dispositif présente, en plus des éléments illustrés à la figure 1, une pince 40 située à gauche du plot 3. Cette dernière représentée très schématiquement à la figure 4, présente pour l'essentiel une tête 41, réalisée en matériau isolant, solidaire d'un doigt 43. Ce dernier est orienté vers une pièce 44, également réalisée en matériau isolant. La tête et les doigts peuvent être actionnés parallèlement à l'axe du doigt, et un ressort de rappel 42 maintient l'extrémité du doigt à faible distance de la pièce 44. Lorsque l'opérateur introduit le fil 6 entre la pièce 44 et le doigt 43, et presse assez fort avec une main sur la tête dans la direction de la flèche B, le fil est alors bloqué à gauche des plots 3 et 5. Avec l'autre main, l'opérateur peut alors exécuter une traction dans la direction de la flèche A assez forte pour sectionner le fil et ceci sans que ses mains soient portées à des potentiels différents.

## Revendications

1. Dispositif pour redresser et couper selon une pointe allongée un fil métallique destiné à servir d'électrode de découpage, en vue de son enfilage sur une machine à électro-érosion, caractérisé par deux plots métalliques (3, 5) reliés aux bornes d'une source de courant (7), et par un écran qui entoure au moins partiellement en direction radiale et uniquement sur une partie de sa longueur, le segment de droite joignant un plot à l'autre, de manière à réduire sur cette partie la perte de chaleur par convection et/ou rayonnement d'un fil conducteur (6) tendu entre les plots (3,5) et chauffé sous l'effet du courant délivré par la source (7), amenant ainsi le segment de fil (6) tendu entre les plots (3,5) à se redresser et à se rompre avec striction à l'endroit protégé par l'écran.

2. Dispositif selon la revendication 1, caractérisé en ce que l'écran entoure au moins partiellement le segment de droite sur une longueur inférieure au quart de la distance entre les plots (3,5).

3. Dispositif selon l'une des revendications précédentes, caractérisé en ce que les plots (3,5) sont montés sur une surface essentiellement verticale d'une machine à électro-érosion par fil.

4. Dispositif selon la revendication 3, caractérisé en ce que les plots (3,5) sont agencés pour être constamment sous tension lorsque la machine est activée.

5. Dispositif selon l'une des revendications précédentes, caractérisé en ce que les plots (3,5) sont montés sur une droite essentiellement horizontale.

6. Dispositif selon la revendication 5, caractérisé en ce que l'écran comprend deux plaques (8,9) parallèles et horizontales, situées au-dessus et au-dessous du segment joignant un plot à l'autre.

7. Dispositif selon l'une des revendications 1 à 5, caractérisé en ce que l'écran est constitué par un cylindre (11) fendu longitudinalement.

8. Dispositif selon l'une des revendications précédentes, caractérisé en ce que l'écran est transparent

9. Dispositif selon l'une des revendications précédentes, caractérisé en ce que les plots (3,5) sont constamment en contact électrique avec les bornes de la source (7).

10. Dispositif selon l'une des revendications précédentes, caractérisé en ce qu'il comporte une pince (40) actionnable manuellement, agencée pour pincer et bloquer le fil (6) et comportant une partie bloquant le fil (6) isolée électriquement de la partie contactée manuellement lors de sa mise en action.

11. Dispositif selon l'une des revendications précédentes, caractérisé en ce que le potentiel de la source (7) est flottant.

12. Dispositif selon l'une des revendications précédentes, caractérisé en ce que l'écran est fixé sur un élément électriquement isolant (10) monté entre les plots (3,5).

## Claims

1. Device for straightening and severing a metallic wire intended for use as a cutting electrode in such a way as to give it a pointed end, in order to thread it on a travelling wire EDM apparatus, characterized in that it comprises two metallic studs (3, 5) electrically connected with the terminals of an electric current source (7), and a shield which surrounds at least partially in radial direction a fraction of the length of the straight line segment joining the studs, whereby the heat loss through convexion and/or radiation of a conductive wire (6) stretched between the studs (3, 5) and heated by the current delivered by the source (7) is reduced within this fraction of the distance separating the studs so as to straighten the segment of the wire (6) stretched between the studs (3, 5), and make it thinner and sever it at the location protected by the shield.

2. Device according to claim 1, characterized in that the shield at least partially surrounds the straight line segment over a longitudinal distance which is smaller than a quarter of the distance separating the studs (3,5).

3. Device according to any preceding claim, characterized in that the studs (3, 5) are mounted on an essentially vertical surface of an EDM travelling wire apparatus.

4. Device according to claim 3, characterized in that an electrical tension is continuously maintained between the studs (3, 5) while the apparatus is activated.

5. Device according to any preceding claim, characterized in that the studs (3, 5) are positioned on an essentially horizontal straight line segment.

6. Device according to claim 5, characterized in that the shield comprises two horizontal, mutually parallel plates (8, 9) located above and below said segment, respectively.

7. Device according to any of claims 1 through 5, characterized in that the shield comprises a longitudinally split cylinder (11).

8. Device according to any preceding claim, characterized in that the shield is transparent.

9. Device according to any preceding claim, characterized in that the studs (3, 5) are constantly electrically connected with the terminals of the source (7).

10. Device according to any preceding claim, characterized in that it comprises a manually operated clamp (40) for gripping and immobilizing the wire (6), and that the part of the clamp which immobilizes the wire (6) is electrically insulated from that which is manipulated by the operator.

11. Device according to any preceding claim, characterized in that the source (7) has a floating potential.

12. Device according to any preceding claim, characterized in that the shield rests on an electrically insulating element (10) mounted between the studs (3, 5).

**Patentansprüche**

1. Vorrichtung, um einen metallischen Draht, der als Schneid-Elektrode dienen soll, gerade zu richten und ihn unter Bildung einer länglichen Spitze zum Zweck seines Einfädelns in einer Elektroerosions-Maschine zu teilen, gekennzeichnet durch zwei mit den Klemmen einer Stromquelle (7) verbundene, metallische Bolzen (3, 5), und durch eine Abschirmung, die den zwischen den Bolzen sich erstreckenden Geradenabschnitt über nur einen Teil seiner Länge mindestens teilweise in radialer Richtung umgibt, um den durch Konvexion und/oder Abstrahlung bedingten Wärmeverlust eines zwischen den Bolzen (3, 5) gespannten und durch einen von der Quelle (7) gelieferten Strom geheizten Drahtes (6) zu verringern, derart dass der zwischen den Bolzen (3, 5) gespannte Drahtabschnitt (6) geradegestreckt wird und an einem durch die Abschirmung geschützten Ort unter Bildung einer Einschnürung reisst.

2. Vorrichtung nach Anspruch 1, dadurch gekennzeichnet, dass die Abschirmung den Geradenabschnitt über weniger als ein Viertel des Abstandes zwischen den Bolzen (3, 5) mindestens teilweise umgibt.

3. Vorrichtung nach einem der vorangehenden Ansprüche, dadurch gekennzeichnet, dass die Bolzen (3, 5) auf einer im wesentlichen vertikalen Fläche einer Draht-Elektroerosionsmaschine angebracht sind.

4. Vorrichtung nach Anspruch 3, dadurch gekennzeichnet, dass die Bolzen (3, 5) eingerichtet sind, um bei eingeschalteter Maschine ständig unter Spannung zu stehen.

5. Vorrichtung nach einem der vorangehenden Ansprüche, dadurch gekennzeichnet, dass die Bolzen (3, 5) auf einer im wesentlichen horizontalen Geraden angebracht sind.

6. Vorrichtung nach Anspruch 5, dadurch gekennzeichnet, dass die Abschirmung zwei parallele, horizontale Platten (8, 9) umfasst, die beidseits des die Bolzen verbindenden Geradenabschnittes liegen.

7. Vorrichtung nach einem der Ansprüche 1 bis 5, dadurch gekennzeichnet, dass die Abschirmung aus einem in Längsrichtung geschlitzten Zylinder (11) besteht.

8. Vorrichtung nach einem der vorangehenden Ansprüche, dadurch gekennzeichnet, dass die Abschirmung durchsichtig ist.

9. Vorrichtung nach einem der vorangehenden Ansprüche, dadurch gekennzeichnet, dass die Bolzen (3, 5) ständig mit den Klemmen der Quelle (7) verbunden sind.

10. Vorrichtung nach einem der vorangehenden Ansprüche, dadurch gekennzeichnet, dass sie eine von Hand betätigbare Zange (40) aufweist, die eingerichtet ist, um den Draht (6) zu fassen und festzuhalten, wobei die Zange einen den Draht (6) festhaltenden Teil aufweist, der von ihrem von Hand betätigbaren Teil elektrisch isoliert ist.

11. Vorrichtung nach einem der vorangehenden Ansprüche, dadurch gekennzeichnet, dass das Potential der Quelle (7) freischwebend ist.

12. Vorrichtung nach einem der vorangehenden Ansprüche, dadurch gekennzeichnet, dass die Abschirmung auf einem elektrisch isolierenden, zwischen den Bolzen (3, 5) angebrachten Träger (10), montiert ist.

*Fig.1*

*Fig.2*

# Fig. 3

# Fig.4